# EUROPEAN PATENT APPLICATION

(11) **EP 4 336 165 A1**
(43) Date of publication of application: **13.03.2024**
(21) Application number: 22194069.5
(22) Date of filing: 06.09.2022
(51) Int. Cl.: G01N 1/06

(54) **SAMPLE HOLDER FOR HOLDING A SAMPLE CARRIER, LOADING STATION, KNIFE HOLDER, MICROTOME AND CORRESPONDING METHODS**

(71) Applicant: Leica Mikrosysteme GmbH, 1170 Wien (AT)
(72) Inventor: Zimmermann, Michael, 2333 Leopoldsdorf (AT)
(74) Representative: DehnsGermany Partnerschaft von Patentanwälten

(57) **Abstract**

The invention essentially relates to a sample holder (300) for holding a sample carrier for carrying a microscopic sample, wherein the sample holder (300) comprises a clamping arrangement (302a, 302b, 302c) with an upper leg and a lower leg, configured to clamp the sample carrier between the upper leg and the lower leg, such that a part of the sample carrier is clamped between respective first ends of the upper leg and the lower leg, configured to be actuated by means of an external force such that the respective first ends of the upper leg and the lower leg are separated from each other for loading the sample carrier into the sample holder, and wherein the clamping arrangement ( 302a, 302b, 302c) is configured to exert a clamping force via the respective first ends of the upper leg and the lower leg to the sample carrier, in order to clamp the sample carrier between the upper leg and the lower leg, when the clamping arrangement is not actuated by means of an external force. The invention also relates to a loading station, a knife holder and corresponding methods.

## Description

### Technical Field

The present invention essentially relates to a sample holder for holding a sample carrier for carrying a microscopic sample, to a loading station for loading a sample carrier into a sample holder, to a knife holder for a microtome, to a microtome, and to corresponding methods.

### Background

In the field of neurosciences, but also in other fields of, e.g., biology and medicine, thin sections of tissues or other samples or microscopic samples can be examined by means of electron microscopes, for example. Such sections can be cut from a specimen block by means of a microtome and then be placed on a sample carrier. Placing such microscopic samples on the sample carrier, after having been cut, can be difficult.

### Summary

In view of the situation described above, there is a need for improvement in placing microscopic samples on sample carriers. According to embodiments of the invention, a sample holder for holding a sample carrier for carrying a microscopic sample, a loading station for loading a sample carrier into a sample holder, a knife holder for a microtome, a microtome, and corresponding methods with the features of the independent claims are proposed. Advantageous further developments form the subject matter of the dependent claims and of the subsequent description.

An embodiment of the invention relates to a sample holder for holding a sample carrier for carrying a sample or microscopic sample. Such microscopic sample can be intended, e.g., for examination in an electron microscope, for example, when placed on the sample carrier. The sample carrier can be so-called slot grid, for example, which is a circular shaped, thin carrier having a slot over which the sample is to be placed. The sample holder comprises a clamping arrangement with an upper leg and a lower leg. At least one of the upper leg and the lower leg can be configured as a leaf spring. The clamping arrangement is configured to clamp the sample carrier between the upper leg and the lower leg, such that a part of the sample carrier (e.g., a section of a rim thereof) is clamped between respective first ends of the upper leg and the lower leg. Further, the clamping arrangement is configured to be actuated by means of an external force such that the respective first ends of the upper leg and the lower leg are separated from each other for loading the sample carrier into the sample holder. In addition, the clamping arrangement is configured to exert a clamping force via the respective first ends of the upper leg and the lower leg to the sample carrier, in order to clamp the sample carrier between the upper leg and the lower leg, when the clamping arrangement is not actuated by means of an external force.

Such sample holder allows handling and holding a sample carrier after insertion in an easy way. In particular, such sample holder allows easy positioning of the sample carrier when used with a microtome. Typically, such microtome comprises a knife holder with a knife and a reception box, in which liquid like water can be provided such that a microscopic sample cut from a specimen or specimen block, by means of the knife, falls or slides onto a surface of the liquid. For example, the sample carrier can be positioned by means of the sample holder in a desired way such that the microscopic sample after having been cut can easily be placed thereon. In contrast to manually handling and holding such sample carrier, the sample holder according to an embodiment of the invention allows much easier placement of the microscopic sample on the sample carrier. A more detailed way on how to place such microscopic sample on the sample carrier, using the sample holder, will be described later.

In an embodiment of the invention, one of the upper leg and the lower leg comprises a through hole configured to receive an actuation rod. The other one of the upper leg and the lower leg is configured to be actuated by means of the external force such that the respective first ends of the upper leg and the lower leg are separated from each other, when the external force is provided to the other one of the first upper leg and the lower leg via the actuation rod received in the through hole. This allows easy insertion of the sample carrier into the sample holder, for example, by means of a device comprising such actuation rod.

According to a further embodiment of the invention, at least one of the upper leg and the lower leg is fixed in the sample holder at a respective second end. This allows easy and effective fixation of the legs and, in particular, an easy way to separate the two legs from each other by means of the actuation rod.

According to a further embodiment of the invention, the sample holder is or is configured for holding multiple sample carriers, for example, sample carriers of the same or similar type. The sample holder comprises multiple ones of the clamping arrangements, and, each of the multiple clamping arrangements is configured to individually hold one of the multiple sample carriers. In this way, many microscopic samples can easily, quickly and in a very efficient way be placed on the respective sample carriers.

According to a further embodiment of the invention, the multiple clamping arrangements are arranged in a circular manner, such that the respective first ends of the respective upper legs and lower legs are arranged in a circular shape. This allows placing the sample holder in a respective knife holder of a microtome in a way to individually position each one of the holder sample carriers at the same desired position.

According to a further embodiment of the invention, each of the multiple clamping arrangements is configured to be actuated individually and independently from the remaining ones of the multiple clamping arrangements by means of an external force such that the respective first ends of the upper leg and the lower leg are separated from each other for loading a respective sample carrier into the sample holder. In this way, individual ones of the sampler carriers can be removed from or inserted into the sample holder without affecting the other ones being inserted and held in the sample holder.

According to a further embodiment of the invention, the sample holder comprises a base, wherein the multiple clamping arrangements are rotatably fixed at the base, such that the multiple clamping arrangements are rotatable with respect to the base around a rotation axis. This allows placing the sample holder in a respective knife holder of a microtome in a way to rotate the sample holder and, thus, to individually position each one of the holder sample carriers at the same desired position. In addition, this allows placing the sample holder in a respective loading in a way to rotate the sample holder and, thus, to individually position each one of the holder sample carriers at the same desired position in order to load or place a sample carrier into the sample holder.

According to a further embodiment of the invention, the sample holder comprises a latching mechanism configured to allow fixation of each one of the multiple clamping arrangements at the same position, and to allow releasing the multiple clamping arrangements for rotation. This allows easier and more efficient loading of the sample carriers into the sample carrier. In addition, this allows easier fixing the respective ones of the sample carriers when used in a knife holder.

Another embodiment of the invention relates to a loading station for loading a sample carrier into a sample holder. The loading station comprises a receiving area configured to receive the sample holder an actuation mechanism and a loading slider. The loading slider is configured to receive a sample carrier. The actuation mechanism is configured to, when actuated, exert a force to the sample holder in order to actuate a clamping arrangement of the sample holder, when the clamping arrangement is positioned at a loading position, such that respective first ends of an upper leg and a lower leg of the clamping arrangement are separated from each other, when the sample holder is received in the receiving area. In an embodiment, the actuation mechanism can comprise an actuation rod configured to, when the actuation mechanism is actuated, extend through a through hole provided in one of the upper leg and the lower leg, and to exert a force to the other one of the upper leg and the lower leg, such that the respective first ends of the upper leg and the lower leg are separated from each other.

Further, the loading station is configured such that the loading slider is slidable towards the sample holder and into a position in which, when a sample carrier is received in the loading slider and when the actuation mechanism is actuated, a part of the sample carrier is positioned between the respective first ends of the upper leg and the lower leg.

Such loading station allows easy loading of one or multiple sample carriers into a sample holder like the one described above. In particular, the insertion of the sample carriers between the legs of the respective clamping mechanism is facilitated.

Another embodiment of the invention relates an arrangement comprising a sample holder and a loading station, each as described as above.

Another embodiment of the invention relates knife holder for a microtome. The knife holder comprises a knife or is configured to be provided with a knife. Such knife can be used to cut microscopic samples, typically in the form of thins sections or slices, from a specimen or specimen block. The knife holder further comprises a reception box for receiving sections cut from a specimen by means of the microtome. Such reception box typically is configured to be provided with or to be filled with a liquid like water. Further, the reception box is configured to receive a sample holder for carrying a sample carrier, and to allow fixing the sample holder at a position relative to the knife. Such position can be a pre-defined one or one out of several pre-defined ones. Preferably, such position can be chosen be a user. In an embodiment, the reception box comprises a sliding mechanism, e.g., with slider and rail. The sliding mechanism is configured to receive the sample holder and the sliding mechanism is configured to be fixed at arbitrary positions or at one or more pre-defined positions relative to the knife; this allows the sample holder to be fixed at a desired position, for example.

Such knife holder, when used with a sample holder like the one described above, allows placing the sample carrier in a desired position next the knife, facilitating easy placement of the microscopic sample on the sample carrier.

According to a further embodiment of the invention, the reception box is configured to be provided with a liquid like water such that the liquid, when provided in the reception box, covers the sample carrier, when the sample holder holds the sample carrier and is received in the reception box, fixed at the position relative to the knife. For example, the reception box can have side walls which a sufficiently high such that a filling level of the liquid can be achieved such that the sample carrier is below the filling level or the surface of the liquid. Such liquid can be use in a way that the microscopic samples, after having been cut from the specimen, fall or slide onto the liquid or its surface. This enhances a following placement of the microscopic sample onto the sample carrier.

According to a further embodiment of the invention, the knife holder, or the reception box thereof, comprises an arrangement to remove the liquid from the reception box such that a filling level of the liquid decreases continuously. This can be achieved, for example, the arrangement comprises or is a valve in the reception box, for example, in a side wall of the reception box. Such valve has then to be positioned below the position of the sample carrier. Also, the arrangement can comprise or be another opening that is configured to be opened and closed.

In this way, the filling level or the surface of the liquid can be lowered, in particular, with a microscopic sample thereon. Thus, the microscopic sample can be placed onto the sample carrier by simply lowering the surface or decreasing the filling level of the liquid.

In addition to such valve or opening, a pump can be used in order to efficiently remove the liquid. This, in addition, allows re-filling liquid again. It is noted that such pump, for example, can also be used without valve or opening. For example, an arrangement comprising such knife holder and such pump can be provided.

Another embodiment of the invention relates to a microtome comprising a knife holder like described above. Such microtome, for example, can be an ultra-microtome.

Another embodiment of the invention relates to a method of loading a sample carrier into a sample holder, using a loading station. The method comprises the following steps: the sample holder is placed in a receiving area of the loading station such that a clamping arrangement of the sample holder is positioned at a loading position. A sample carrier is loaded into a loading slider of the loading station. An actuation mechanism of the loading station is actuated in order to separate respective first ends of an upper leg and a lower leg of the clamping arrangement from each other. The loading slider is slide towards the sample holder, such that a part of the sample carrier is positioned between the respective first ends of the upper leg and the lower leg. Then, the actuation mechanism is released such that the sample carrier is clamped between the upper leg and the lower leg. This is an easy way of how to exactly position the sample carrier in the sample holder. In an embodiment, a sample holder and a loading station as described above can be used.

According to a further embodiment of the invention, the method is for loading multiple sample carriers into the sample holder, when the sample holder comprises multiple ones of the clamping arrangements. The method comprises the following steps, for each of the further ones of the multiple sample carriers: the sample carrier is loaded into the loading slider. The sample holder is actuated in order to position a next clamping arrangement of multiple ones of the clamping arrangements of the sample holder at the loading position. The actuation mechanism of the loading station is actuated in order to separate the respective first ends of the upper leg and a lower leg of the respective clamping arrangement from each other. The loading slider is slide towards the sample holder, such that a part of the sample carrier is positioned between the respective first ends of the upper leg and the lower leg. Then, the actuation mechanism is released such that the sample carrier is clamped between the upper leg and the lower leg. For this method, in embodiment, a sample holder having multiple clamping arrangements as described above can be used.

Another embodiment of the invention relates to a method of placing a sample cut from a specimen by means of a microtome, on a sample carrier loaded into a sample holder. The method comprises the following steps: The sample holder is provided in a reception box of the microtome; such reception box can be comprised by a knife holder of the microtome. The sample holder is fixed at a desired position relative to a knife of the microtome (or, in particular, of the knife holder), such that the sample carrier has a desired position relative to the knife. A fluid like water is provided in the reception box such that the fluid covers the sample carrier. Then, the sample is cut from the specimen by means of the microtome, such that the specimen is located on a surface of the fluid and above the sample carrier; it is noted that such microscopic samples typically swim at the surface of such liquid. Further, at least part of the fluid is removed from the reception box such that the sample (it is on the surface of the liquid) is lowered and placed on the sample carrier.

This is a very easy and efficient way to place microscopic samples onto a sample carrier. No manual handling of the sample carrier or the microscopic sample is required. In an embodiment, a sample holder and a microtome as described above can be used.

According to a further embodiment of the invention, the method is for placing multiple samples cut from the specimen by means of the microtome, on respective ones of multiple sample carriers loaded into the sample holder, in particular, when the sample holder comprises multiple ones of the clamping arrangements. The method comprises the following steps, for each of the further ones of the multiple sample carriers: the sample holder is actuated such that a next sample carrier has a desired position relative to the knife. A fluid is provided in the reception box such that the fluid covers the sample carrier. The sample is cut from the specimen by means of the microtome, such that the sample is located on a surface of the fluid and above the respective sample carrier. Then, at least part of the fluid is removed from the reception box such that the respective sample is lowered and placed on the respective sample carrier.

In this way, multiple samples can be placed on respective ones of the sample carriers, in an easy, quick and efficient way. In this regard, it is to be noted that actuation the sample holder in order to place next ones of the sampler carriers at the desired position, can lead to sample carriers with samples placed thereon be covered with liquid or be dived into liquid. The inventors have recognized that such samples stick to the sample carrier even if dived into liquid like water. This allows the use of such sample holder with multiple clamping arrangements, in particular, with the circular shape (like a carrousel) as mentioned above. For this method, in an embodiment, a sample holder having multiple clamping arrangements as described above can be used.

Further advantages and embodiments of the invention will become apparent from the description and the appended figures.

It should be noted that the previously mentioned features and the features to be further described in the following are usable not only in the respectively indicated combination, but also in further combinations or taken alone, without departing from the scope of the present invention.

### Short description of the Figures

- Fig. 1a: schematically shows a sample holder according to an embodiment of the invention;
- Fig. 1b: schematically shows the sample holder of Fig. 1a in a different situation;
- Fig. 1c: schematically shows the sample holder of Fig. 1a in a further different situation;
- Fig. 2a: schematically shows a knife holder according to an embodiment of the invention;
- Fig. 2b: schematically shows the knife holder of Fig 2b in a different situation;
- Fig. 2c: schematically shows the knife holder of Fig 2b in a further different situation;
- Fig. 3: schematically shows a sample holder according to a further embodiment of the invention;
- Fig. 4: schematically shows a knife holder according to a further embodiment of the invention
- Fig. 5a: schematically shows a loading station according to an embodiment of the invention;
- Fig. 5b: schematically shows the loading station of Fig. 5a in a different situation;
- Fig. 5c: schematically the loading station of Fig. 5a in a different view;
- Fig. 6: schematically shows a microtome according to an embodiment of the invention;
- Fig. 7: schematically shows a method according to an embodiment of the invention in a flow diagram;
- Fig. 8: schematically shows a method according to a further embodiment of the invention in a flow diagram.

### Detailed Description

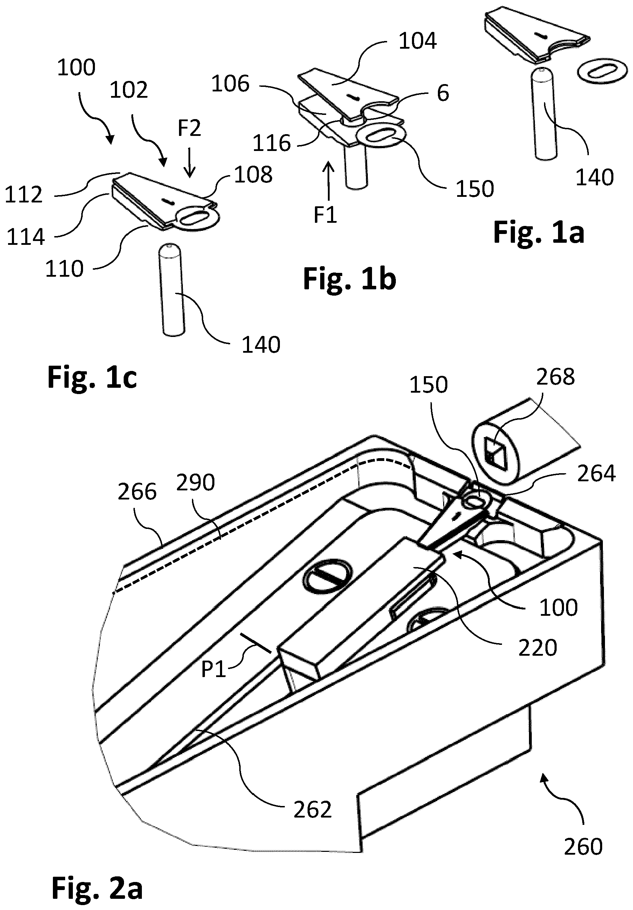

Fig. 1a schematically illustrates a sample holder 100 according to an embodiment of the invention. The sample holder 100 is or is configured for holding a sample carrier 150 for carrying a sample or microscopic sample. The sample carrier 150 can be of circular shape, having a slit therein; for example, sample carrier 150 can be a so-called slot grid like used in electron microscopy. Fig. 1a illustrates the sample carrier 150 separately from the sample holder 100. Fig. 1b schematically illustrates the sample 100 of Fig. 1a in a different situation, and Fig. 1c schematically illustrates the sample holder 100 of Figs. 1a and 1b in a further different situation, the sample carrier 150 being inserted in the sample holder 100. Figs. 1a, 1b and 1c will be described in common in the following.

The sample holder 100 comprises a clamping arrangement 102 with an upper leg 104 and a lower leg 106. In an embodiment, at least one of the upper leg 104 and the lower leg 106 is configured as a leaf spring. Also, both legs 104, 106 can be configured as leaf springs. The clamping arrangement 102 is configured to clamp the sample carrier 150 between the upper leg 104 and the lower leg 106, such that a part of the sample carrier 150 like an outer rim or a part thereof is clamped between respective first ends 108, 110 of the upper leg 104 and the lower leg 110.

Further, the clamping arrangement 102 is configured to be actuated by means of an external force F1, see Fig. 1b, such that the respective first ends 108, 110 of the upper leg 104 and the lower leg 106 are separated from each other for loading the sample carrier into the sample holder 100. In an embodiment, one of the upper leg and the lower leg - in Fig. 1b it is the lower leg 106 - comprises a through hole 116 configured to receive an actuation rod 140. The other one of the upper leg and the lower leg - it is the upper leg 104 in Fig. 1b - is configured to be actuated by means of the external force F1 such that the respective first ends of the upper leg and the lower leg are separated from each other, when the external force is provided to the other one of the first upper leg and the lower leg via the actuation rod 140 received in the through hole 116. It is noted that such actuation rod 140 is, typically, part of a device separate from the sample holder 100.

Fig. 1b illustrates the situation with the legs 104, 106 separated from each other by means of the external force F1, provided by means of the actuation rod 140 received in and extending through the through hole 116, in this embodiment. In addition, the sample carrier 150 is placed, by means of example, with a rim at the first end 110 of the lower leg 106.

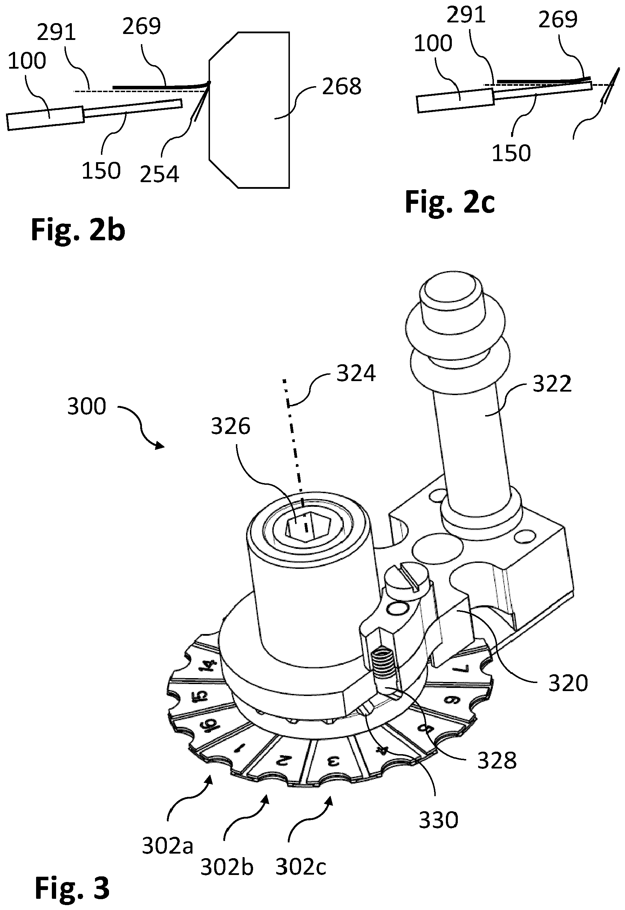

In an embodiment, at least one of the upper leg and the lower leg is fixed in the sample holder 100 at a respective second end 112, 114. The sample holder 100 can comprise a base in which the upper and/or lower leg is fixed. Such base is not shown in Figs. 1a, 1b and 1c, but in Fig. 2.

Further, the clamping arrangement 102 is configured to exert a clamping force F1, see Fig. 1c, via the respective first ends 108, 110 of the upper leg and the lower leg to the sample carrier 150, in order to clamp the sample carrier 150 between the upper leg 104 and the lower leg 106, when the clamping arrangement is not actuated by means of an external force. Fig. 1c illustrates the situation with the sample carrier 150 clamped between the first ends 108, 110 of the upper leg 104 and the lower leg 106. The actuation rod 140 is removed from the through hole 116.

Fig. 2 schematically illustrates a knife holder 260 according to an embodiment of the invention. The knife holder 260 can be used as a part of a microtome. The knife holder 260 comprises a knife 264, which is to be used to cut samples from a specimen or specimen block 268. The specimen block 268 can be held within or by a microtome as will be described later. The knife holder 260 further comprises a reception box 266 for receiving sections (i.e., samples) cut from the specimen 268 by means of the microtome, using the knife 254.

The reception box 266 is configured to receive a sample holder for carrying a sample carrier 150, like sample holder 100 of Figs. 1a to 1c. Sample holder 100 shown in Fig. 2a comprises a base 230 in which the clamping arrangement 102 is fixed. The reception box 266 is configured to allow fixing the sample holder 100 at a position relative to the knife 264. In an embodiment, one or several pre-defined positions can be provided at which the sample holder 100 can be fixed. By means of example, one such position is indicated by line P1. When the left end of the base 220 is positioned at line P, the sample carrier 150 is positioned at a desired position relative to knife 264, for example.

In an embodiment, the reception box 266 comprises a sliding mechanism 262 configured to receive the sample holder 100. For example, the sliding mechanism 262 comprises a rail and a slider sliding therein. The sample holder 100 can, for example be fixed at the slider. The sliding mechanism 262 is configured to be fixed at an arbitrary position (e.g., along the rail) or at one or more pre-defined positions relative to the knife 264. In this way, the sample holder can, for example, be fixed at position P1 by fixing the sliding mechanism appropriately.

In case of arbitrary positions for fixing the slicing mechanism, a user might choose the desired position of the sample holder (with the sample carrier) relative to the knife 264 appropriately. In case of pre-defined positions for fixing the slicing mechanism, the user is assisted in finding the appropriate position (or one out of several ones) of the sample holder (with the sample carrier) relative to the knife 264.

In an embodiment, the reception box 266 is configured to be provided with a liquid like water such that the liquid, when provided in the reception box 266, covers the sample carrier 150, when the sample holder 100 is received in the reception box 262, fixed at the position P1 relative to the knife 264, and holds the sample carrier 150. By means of example, a filling level 290 of such liquid is indicated by means of a dashed-line inside the reception box 266

In a further embodiment, the knife holder 260 is configured to allow removal of the liquid from the reception box 266 such that filling level 265 of the liquid decreases continuously. For example, the knife holder 260 or the reception box 266 can comprise a valve for such purpose (not shown here). If, for example, a current filling level of liquid corresponds to filling level 290, the sample carrier 150 is fully covered with the liquid, i.e., the sample carrier 150 is below the surface of the liquid. By opening the valve (be it manually or automatically), the filling level decreases and, after a sufficient amount of liquid is removed, the filling level is below the sample carrier 150 such that, for example, part of the sample carrier 150 or the entire sample carrier 150 is above the filling level and the surface of the liquid.

Fig. 2b schematically illustrates the knife holder 260 or parts thereof in a different view and situation. By means of example, the knife 254 is shown during cutting a section or sample 269 from specimen 268. The sample 269 is swimming on the surface 291 of the liquid, wherein the surface 291 has a height corresponding to filling level 290. The sample carrier 150 held by the sample holder 100 is below the surface 291 of the liquid. After the cutting process has been finished (then, the sample 291 is cut off the specimen 268), the filling level 290 can be lowered such that the sample 269, still swimming on the surface 291 of the liquid, will be placed on the sample carrier; this is illustrated in Fig. 2c.

Fig. 3 schematically illustrates a sample holder 300 according to a further embodiment of the invention. Sample holder 300 of is configured for holding multiple sample carriers and comprises multiple clamping arrangements. By means of example, three clamping arrangements 302a, 302b, 302c are indicated by reference numerals. By means of example, the sample 300 comprises 16 clamping arrangements, provided with numbers 1 to 16 in Fig. 3 (not that not all of these clamping arrangements are visible in Fig. 3). Each of the multiple clamping arrangements is configured to individually hold one of the multiple sample carriers. It is noted that also different numbers of clamping arrangements may be provided, for example, eight or 12 or 18 or 24.

Each one of the multiple clamping arrangements like 302a, 302b, 302c can be similar to or equal to the clamping arrangement 102 shown in Figs. 1a to 1c. In an embodiment, the multiple clamping arrangements like 302a, 302b, 302c are arranged in a circular manner, such that the respective first ends of the respective upper legs and lower legs are arranged in a circular shape. This is illustrated, by means of example, in Fig. 3.

In an embodiment, each of the multiple clamping arrangements like 302a, 302b, 302c is configured to be actuated individually and independently from the remaining ones of the multiple clamping arrangements by means of an external force such that the respective first ends of the upper leg and the lower leg are separated from each other for loading a respective sample carrier into the sample holder 300. In an embodiment, the sample holder 300 comprises a base 230, wherein the multiple clamping arrangements are rotatably fixed at the base 320, such that the multiple clamping arrangements like 302a, 302b, 302c are rotatable with respect to the base 320 around a rotation axis 324.

In an embodiment, the sample holder 300 comprises a latching mechanism configured to allow fixation of each one of the multiple clamping arrangements like 302a, 302b, 302c at the same position, and to allow releasing the multiple clamping arrangements for rotation. For example, such latching mechanism can comprise a pin 328 urged (e.g., downwards) onto the clamping mechanisms, and a slit or groove 330 for each of the clamping mechanisms. In the example shown in Fig. 3, clamping mechanism 302a is positioned at a certain position. By means of a tool to be inserted into reception 326, for example, the multiple clamping arrangements can be rotated. Clockwise rotation by 22,5°, for example (the angle might be different for other numbers of clamping arrangements), results in clamping mechanism 302b reaching the position which clamping mechanism 302a previously had. Due to latching mechanism 328, 330, rotation requires a small a mount of force to be started.

In an embodiment, the sample holder 300 comprises a handle 322 by means of which the entire sample holder 300 can easily be gripped and put into a knife holder, for example.

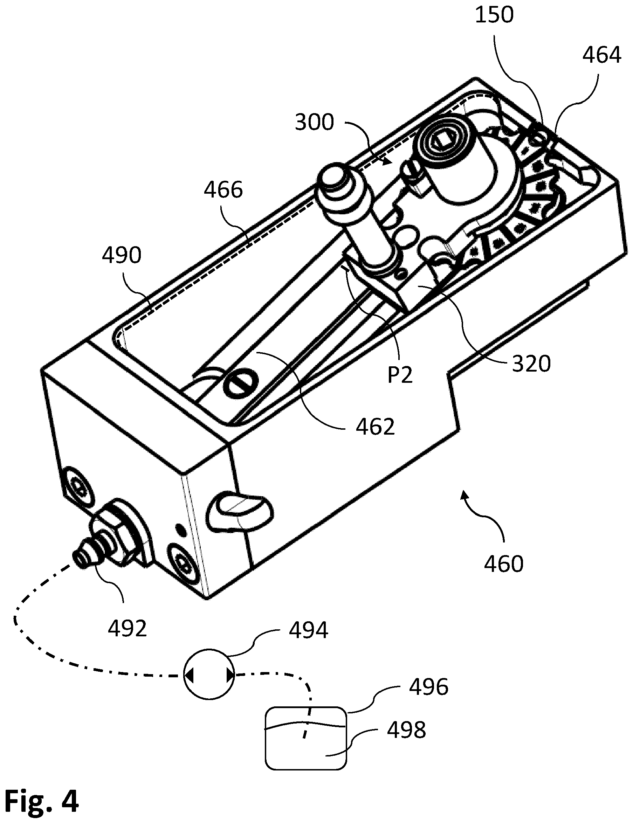

Fig. 4 schematically illustrates a knife holder 460 according to a further embodiment of the invention. The knife holder 460 can be used as a part of a microtome. The knife holder 460 comprises a knife 464, which is to be used to cut samples from a specimen or specimen block (not shown here but similar or equal to Fig. 2). The knife holder 460 further comprises a reception box 466 for receiving sections (i.e., samples) cut from the specimen by means of the microtome, using the knife 464.

The reception box 466 is configured to receive a sample holder for carrying a sample carrier 150, like sample holder 300 of Fig. 3. The reception box 466 is configured to allow fixing the sample holder 300 at a position relative to the knife 464. In an embodiment, one or several pre-defined positions can be provided at which the sample holder 300 can be fixed. By means of example, one such position is indicated by line P2. When the left end of the base 320 is positioned at line P2, the sample carrier 150 is positioned at a desired position relative to knife 264, for example.

In an embodiment, the reception box 466 comprises a sliding mechanism 462 configured to receive the sample holder 300. For example, the sliding mechanism 462 comprises a rail and a slider sliding therein. The sample holder 300 can, for example be fixed at the slider. The sliding mechanism 462 is configured to be fixed at an arbitrary position (e.g., along the rail) or at one or more pre-defined positions relative to the knife 464. In this way, the sample holder can, for example, be fixed at position P2 by fixing the sliding mechanism appropriately.

In case of arbitrary positions for fixing the slicing mechanism, a user might choose the desired position of the sample holder (with the sample carrier) relative to the knife 464 appropriately. In case of pre-defined positions for fixing the slicing mechanism, the user is assisted in finding the appropriate position (or one out of several ones) of the sample holder (with the sample carrier) relative to the knife 464. By means of actuating the sample holder 300, when fixed in the reception box 466, each of the multiple clamping arrangements and, thus, each of the multiple sample carriers held therein, can be placed next the knife 464.

In an embodiment, the reception box 466 is configured to be provided with a liquid like water such that the liquid, when provided in the reception box 466, covers the sample carrier 150, when the sample holder 300 is received in the reception box 462, fixed at the position P2 relative to the knife 464, and holds the sample carrier 150. By means of example, a filling level 490 of such liquid is indicated by means of a dashed-line inside the reception box 266

In a further embodiment, the knife holder 460 further comprises an arrangement 492 to remove the liquid from the reception box 466 such that filling level 490 of the liquid decreases continuously. For example, the arrangement 492 can comprise or be a valve for such purpose. If, for example, a current filling level of liquid corresponds to filling level 490, the sample carrier 150 is fully covered with the liquid, i.e., the sample carrier 150 is below the surface of the liquid. By opening the valve 492 (be it manually or automatically), the filling level decreases and, after a sufficient amount of liquid is removed, the filling level is below the sample carrier 150 such that, for example, part of the sample carrier 150 or the entire sample carrier 150 is above the filling level and the surface of the liquid.

In an embodiment, a pump 494 (and lines or pipes for liquid) can be provided by means of which liquid 498 can be pumped from a reservoir 496, via valve 492, into the reception box 466, for example, until filling level 490 is reached. Also, pump 494 can be used to remove liquid from the reception box 492, via valve 490 and provide it, e.g., to reservoir 496. Pump 494 can be an automated pump, for example.

It is noted that knife holder 460 of Fig. 4 can be similar to or even equal to the knife holder 260 of Fig. 2. The sliding mechanisms 262 and 462 might be different in that sliding mechanism 262 is particularly adapted to sample holder 100 and sliding mechanism 462 is particularly adapted to sample holder 300. However, sliding mechanisms 262 and 462 can also be the same and configured such that either sample holder 100 or sample holder 300 can be fixed to it.

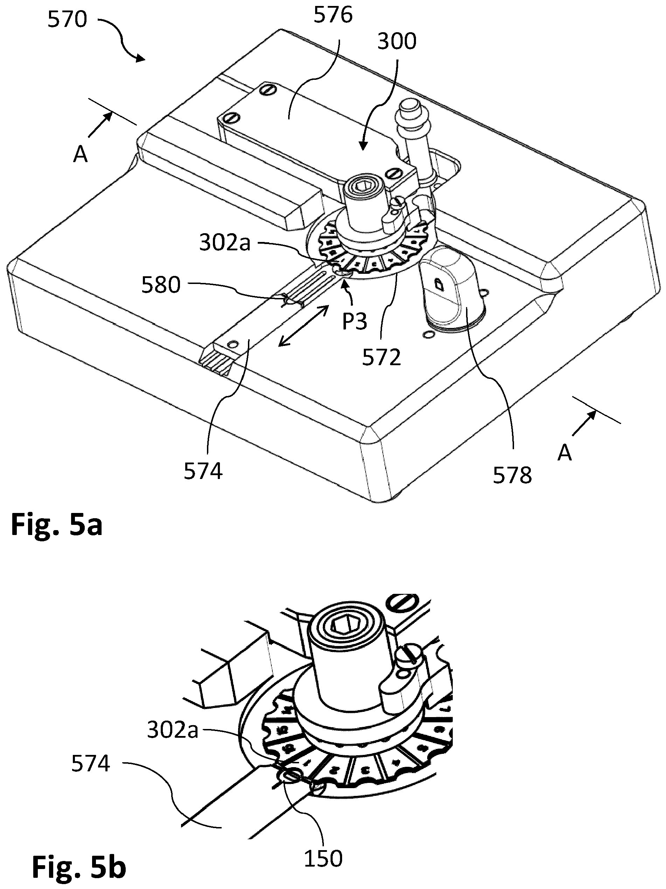

Fig. 5a schematically illustrates a loading station 570 according to an embodiment of the invention. Loading station 570 is intended or configured for loading a sample carrier into a sample holder like sample holder 100 or 300. By means of example, sample holder 300 is shown in Fig. 5a.

The loading station 570 comprises a receiving area 572 configured to receive the sample holder 300, an actuation mechanism with an actuation knob 578 and a loading slider 574. The loading station 570 can comprise, for example, a lock bar 576 or the like configured to fix or lock the sample holder 300 when received in the receiving area 572. The loading slider 574 is configured to receive a sample carrier, for example, in a receiving section 580. The actuation mechanism 578 is configured to, when actuated, exert a force to the sample holder 300 in order to actuate a clamping arrangement 302a of the sample holder 300, when the clamping arrangement 302a is positioned at a loading position P3, such that respective first ends of an upper leg and a lower leg of the clamping arrangement 302a are separated from each other, when the sample holder 300 is received in the receiving area 572.

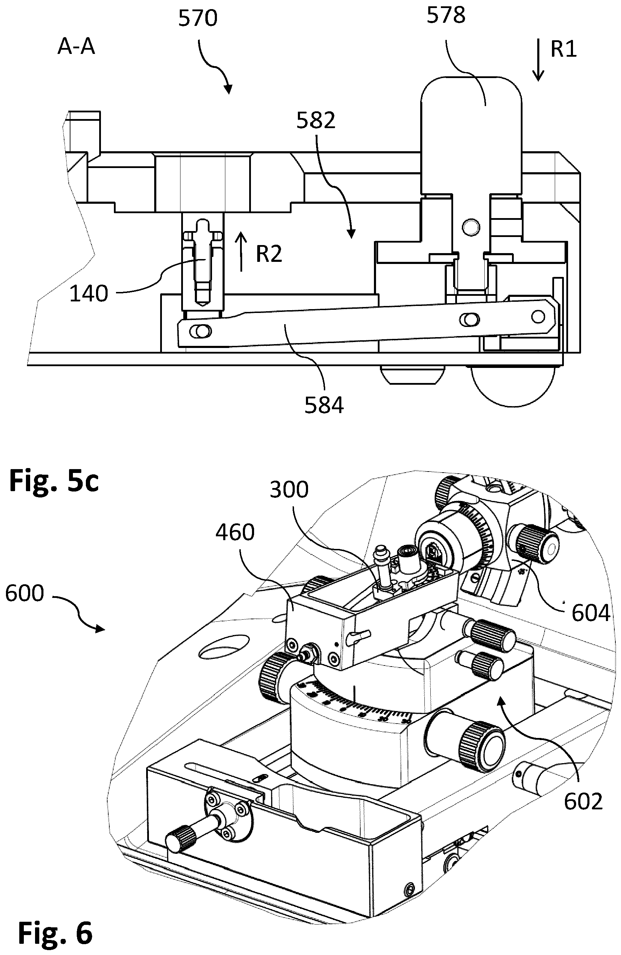

Fig. 5c illustrates loading station 570 of Fig. 5a in a cross section, along line A-A. In an embodiment, as shown in Fig. 5c, the actuation mechanism 582 comprises an actuation rod like actuation rod 140 shown in Figs. 1a to 1c, configured to, when the actuation mechanism 582 is actuated, extend through a through hole provided in one of the upper leg and the lower leg, and to exert a force to the other one of the upper leg and the lower leg, such that the respective first ends of the upper leg and the lower leg are separated from each other.

In an embodiment, the actuation mechanism 582 comprises the actuation knob 578, a lever or connector 584 and the actuation rod 140. These components are linked to each other and arranged inside the loading station 570 such that when the actuation knob 578 is pushed downwards, see direction R1, the actuation rod 140 is pushed upwards, see direction R2. For example, the actuation mechanism 582 can be configured such that turning the actuation knob 578, when pushed downwards (and in its lower position), locks the actuation mechanism 582 such that the actuation rods 140 remains in it upper position. This allows inserting the sample carrier. Afterwards, the actuation knob 578 can be unlocked such that the actuation rods 140 returns to its lower position, for example, by means of a spring or the like.

Further, the loading station 570 is configured such that the loading slider 574 is slidable towards the sample holder 300 and into a position in which, when a sample carrier is received in the loading slider 574 and when the actuation mechanism is actuated, a part of the sample carrier is positioned between the respective first ends of the upper leg and the lower leg.

Afterwards, the actuation mechanism can be released in order to clamp sample carrier 150 in the clamping mechanism 302a. This situation is illustrated in Fig. 5b. Then, slider 574 can be removed. Then, the sample holder 300 can be actuated in order to position a next clamping arrangement at the loading position. By repeating the mentioned steps. Multiple sample carriers can be loaded into the sample carrier 300.

Fig. 6 schematically illustrates a microtome 600 according to an embodiment of the invention. The microtome 600 comprises a knife holder like, by means of example, knife holder 460. Knife holder 460, by means of example, comprises sample holder 300. Further, microtome 600 can comprise an actuation and/or positioning mechanism 602 and a holding mechanism 604.

The actuation and/or positioning mechanism 602 can be configured such that knife holder 460 can be fixed to it. The holding mechanism 604 can be configured to hold a specimen or specimen block like shown in Fig. 2. The actuation and/or positioning mechanism 602 allows rotating and/or moving the knife holder 460 and, thus, the knife thereof, in different directions such that the knife can achieve a desired orientation and/or position relative to the specimen. By moving holding mechanism 604 and, thus, the specimen held therein, up and down, sections can be cut form the specimen. This results in a situation like the one shown in Figs. 2b and 2c.

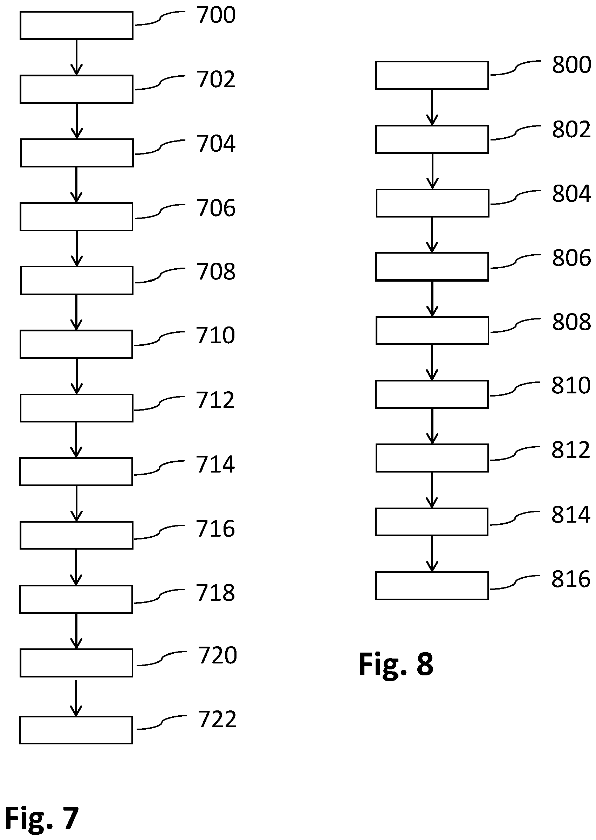

Fig. 7 schematically illustrates a method according to an embodiment of the invention in a flow diagram. The method relates to loading a sample carrier into a sample holder like sample holder 300 shown in Fig. 3, using a loading station like the loading station 570 shown in Figs. 5a to 5c.

In a step 700, the sample holder is placed in a receiving area of the loading station such that a clamping arrangement of the sample holder is positioned at a loading position. Such a situation is illustrated in Fig. 5a. In step 702, a sample carrier is loaded into a loading slider of the loading station. In step 704, an actuation mechanism of the loading station is actuated in order to separate respective first ends of an upper leg and a lower leg of the clamping arrangement from each other. Such a situation is illustrated, for an individual clamping arrangement, in Fig. 1b. In step 706, the loading slider is slide towards the sample holder, such that a part of the sample carrier is positioned between the respective first ends of the upper leg and the lower leg. In step 708, the actuation mechanism is released such that the sample carrier is clamped between the upper leg and the lower leg. Such a situation is illustrated in Fig. 5b. In a step 710, the sliding mechanism can be slide away again. If no further sample carrier has to be loaded, the sample holder can be removed from the loading station.

In an embodiment, the method can comprise further steps for loading further sample carriers into the sample holder. For each of the further ones of the sample carriers, the following steps can be performed. In step 712, the sample carrier is loaded into the loading slider. In step 714, the sample holder is actuated in order to position a next clamping arrangement of multiple ones of clamping arrangements of the sample holder at the loading position. In the example of Fig. 5a, clamping arrangement 302b would then take the position of clamping arrangement 302a. In step 716, the actuation mechanism of the loading station is actuated in order to separate the respective first ends of the upper leg and a lower leg of the respective clamping arrangement from each other. In step 718, the loading slider is slide towards the sample holder, such that a part of the sample carrier is positioned between the respective first ends of the upper leg and the lower leg. In step 720, the actuation mechanism is released, such that the sample carrier is clamped between the upper leg and the lower leg. In a step 722, the sliding mechanism can be slide away again. If no further sample carrier has to be loaded, the sample holder can be removed from the loading station.

Fig. 8 schematically illustrates a method according to an embodiment of the invention in a flow diagram. The method relates to placing a sample cut from a specimen by means of a microtome like microtome 600 shown in Fig.6, on a sample carrier loaded into a sample holder like sample holder 100 shown in Figs. 1a to 1c, 2 or like sample holder 300 shown in Fig. 3. Particular reference will be made to Figs. 2b and 2c.

In a step 800, the sample holder is placed in a reception box of the microtome. In step 802, the sample holder is fixed at a desired position relative to a knife of the microtome, such that the sample carrier has a desired position relative to the knife. In step 804, a fluid is provided in the reception box such that the fluid covers the sample carrier. Such situation is shown in Figs. 2a and 4. In step 806, the sample is cut from the specimen by means of the microtome, such that the specimen is located on a surface of the fluid and above the sample carrier; such situation is shown in Fig. 2b. In step 808, at least part of the fluid is removed from the reception box such that the sample is lowered and placed on the sample carrier; such situation is shown in Fig. 2c. If no further sample has to be placed on a sample carrier, the sample holder can be removed from the knife holder and, then, the sample carrier can be removed from the sample holder in order to be used in an electron microscope, for example.

In an embodiment, the method can comprise further steps for placing further samples cut from the specimen by means of the microtome, on respective ones of multiple sample carriers loaded into the sample holder. For each of the further ones of the sample carriers, the following steps can be performed. In step 810, the sample holder is actuated such that a next sample carrier has a desired position relative to the knife; this can include using a tool for rotating the clamping arrangements. In step 812, a fluid is provided in the reception box (e.g., by filling fluid back int the reception box) such that the fluid covers the sample carrier. Again, a situation like shown in Figs. 2a and 4 is reached. It is noted that in this situation, the sample carrier that hast been rotated away, and the sample placed thereon, will be below the surface of the liquid. The sample, however, will not be removed from the sample carrier by the liquid, due to adhesive forces establishing by just placing the sample on the sample carrier as mentioned above.

In step 814, the sample is cut from the specimen by means of the microtome, such that the sample is located on a surface of the fluid and above the respective sample carrier; this again is a situation like shown in Fig. 2b. In step 816, at least part of the fluid is removed from the reception box such that the respective sample is lowered and placed on the respective sample carrier. This is again a situation like shown in Fig. 2c. If no further sample has to be placed on a sample carrier, the sample holder can be removed from the knife holder and, then, the sample carriers can be removed from the sample holder in order to be used in an electron microscope, for example.

It is noted that not only a single sample can be placed on an individual sample carrier in this way. Depending on the needs, for example, several ones of such samples can be cut from the specimen and placed on the same sample carrier, next to each other. After a desired number of samples have been placed on the sample carrier, the sample holder can be actuated in order to provide a next sample carrier.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### List of Reference Signs

- 100, 300: sample holder
- 102, 302a, 302b, 302c: clamping arrangement
- 104: upper leg
- 106: lower leg
- 108, 110: first ends
- 112, 114: second ends
- 116: through hole
- 140: actuation rod
- 150: sample carrier

- 220,320: base
- 260, 460: knife holder
- 262, 462: sliding mechanism
- 264,464: knife
- 268: specimen
- 290, 490: filling level
- 291: surface

- 322: handle
- 324: rotation axis
- 326: reception
- 328: pin
- 330: groove

- 492: valve
- 494: pump
- 496: reservoir
- 498: liquid

- 570: loading station
- 572: receiving area
- 574: slider
- 576: lock bar
- 578: actuation knob
- 580: receiving section
- 582: actuation mechanism
- 584: lever

- 600: microtome
- 602: actuation and/or positioning mechanism
- 604: holding mechanism

- 700-722, 800-816: methods steps

- F1, F2: forces
- P1, P2: positions
- R1, R2: directions

## Claims

1. A sample holder (100, 300) for holding a sample carrier (150) for carrying a microscopic sample (269),
wherein the sample holder (100, 300) comprises a clamping arrangement (102, 302a, 302b, 302c) with an upper leg (104) and a lower leg (106),
wherein the clamping arrangement (102, 302a, 302b, 302c ) is configured to clamp the sample carrier (150) between the upper leg (104) and the lower leg (106), such that a part of the sample carrier (150) is clamped between respective first ends (108, 110) of the upper leg (104) and the lower leg (110),
wherein the clamping arrangement (102) is configured to be actuated by means of an external force (F1) such that the respective first ends (108, 110) of the upper leg and the lower leg are separated from each other for loading the sample carrier into the sample holder (100, 200), and
wherein the clamping arrangement (102, 302a, 302b, 302c) is configured to exert a clamping force (F2) via the respective first ends (108, 110) of the upper leg and the lower leg to the sample carrier (150), in order to clamp the sample carrier between the upper leg (104) and the lower leg (106), when the clamping arrangement is not actuated by means of an external force.

2. The sample holder (100, 300) of claim 1, wherein one (106) of the upper leg and the lower leg comprises a through hole (116) configured to receive an actuation rod (140), and wherein the other one (104) of the upper leg and the lower leg is configured to be actuated by means of the external force such that the respective first ends of the upper leg and the lower leg are separated from each other, when the external force is provided to the other one of the first upper leg and the lower leg via the actuation rod (140) received in the through hole (116).

3. The sample holder (100, 300) of claim 1 or 2, wherein at least one of the upper leg (104) and the lower leg (106) is configured as a leaf spring.

4. The sample holder (100, 300) of any one of the preceding claims, wherein at least one of the upper leg and the lower leg is fixed in the sample holder at a respective second end (112, 114).

5. The sample holder (300) of any one of the preceding claims, for holding multiple sample carriers (150), wherein the sample holder (300) comprises multiple ones of the clamping arrangements (302a, 302b, 302c), wherein each of the multiple clamping arrangements (302a, 302b, 302c) is configured to individually hold one of the multiple sample carriers (150).

6. The sample holder (300) of claim 5, wherein the multiple clamping arrangements (302a, 302b, 302c) are arranged in a circular manner, such that the respective first ends of the respective upper legs and lower legs are arranged in a circular shape.

7. The sample holder (300) of claim 5 or 6, wherein each of the multiple clamping arrangements (302a, 302b, 302c) is configured to be actuated individually and independently from the remaining ones of the multiple clamping arrangements by means of an external force such that the respective first ends of the upper leg and the lower leg are separated from each other for loading a respective sample carrier (150) into the sample holder (300).

8. The sample holder (300) of any one of claims 5 to 7, comprising a base (230), wherein the multiple clamping arrangements are rotatably fixed at the base (320), such that the multiple clamping arrangements (302a, 302b, 302c) are rotatable with respect to the base (320) around a rotation axis (324).

9. The sample holder (300) of claim 8, comprising a latching mechanism (328, 330) configured to allow fixation of each one of the multiple clamping arrangements (302a, 302b, 302c) at the same position, and to allow releasing the multiple clamping arrangements for rotation.

10. A loading station (570) for loading a sample carrier (150) into a sample holder (300), wherein the loading station (570) comprises a receiving area (572) configured to receive the sample holder (300),
wherein the loading station (570) comprises an actuation mechanism (582) and a loading slider (574), wherein the loading slider (574) is configured to receive a sample carrier (150),
wherein the actuation mechanism (578) is configured to, when actuated, exert a force to the sample holder (300) in order to actuate a clamping arrangement of the sample holder, when the clamping arrangement is positioned at a loading position (P3), such that respective first ends of an upper leg and a lower leg of the clamping arrangement are separated from each other, when the sample holder (300) is received in the receiving area (572),
wherein the loading station (570) is configured such that the loading slider (574) is slidable towards the sample holder (300) and into a position in which, when a sample carrier is received in the loading slider (574) and when the actuation mechanism is actuated, a part of the sample carrier is positioned between the respective first ends of the upper leg and the lower leg.

11. The loading station (570) of claim 10, wherein the actuation mechanism (582) comprises an actuation rod (140) configured to, when the actuation mechanism (582) is actuated, extend through a through hole provided in one of the upper leg and the lower leg, and to exert a force to the other one of the upper leg and the lower leg,
such that the respective first ends of the upper leg and the lower leg are separated from each other.

12. The loading station (570) of claim 10 or 11, for loading a sample carrier (150) into the sample holder (100, 300) of any one of claims 1 to 9.

13. An arrangement comprising the sample holder (100, 300) of any one of claims 1 to 9 and the loading station (570) of any one of claims 10 to 12.

14. A knife holder (260, 460) for a microtome, comprising a knife (264, 464) or configured to be provided with a knife, further comprising a reception box (266, 466) for receiving sections cut from a specimen (268) by means of the microtome,
wherein the reception box (266, 466) is configured to receive a sample holder (100, 300) for carrying a sample carrier (150), and wherein the reception box (266, 466) is configured to allow fixing the sample holder at a position (P1, P2) relative to the knife (264, 464).

15. The knife holder (260, 460) of claim 14, wherein the reception box (266, 466) is configured to be provided with a liquid such that the liquid, when provided in the reception box (266), covers the sample carrier (150), when the sample holder (100) holds the sample carrier (150) and is received in the reception box (266) fixed at the position (P1, P2) relative to the knife (264).

16. The knife holder (260, 460) of claim 15, further comprising an arrangement (492) to remove the liquid from the reception box (266) such that a filling level (290, 490) of the liquid decreases continuously.

17. The knife holder (260, 460) of any one of claims 14 to 16, wherein the reception box (266, 466) comprises a sliding mechanism (262, 462) configured to receive the sample holder (100, 300), and wherein the sliding mechanism (262, 462) is configured to be fixed at arbitrary positions or at one or more pre-defined positions relative to the knife.

18. The knife holder (260, 460) of any one of claims 14 to 17, comprising the sample holder (100, 300) of any one of claims 1 to 9.

19. A microtome (600) comprising the knife holder (260, 460) of any one of claims 14 to 18.

20. A method of loading a sample carrier (150) into the sample holder (100, 300) of any one of claims 1 to 9, using the loading station (570) of any one of claims 10 to 12.

21. A method of loading a sample carrier (150) into a sample holder (100, 300), using a loading station (570), the method comprising the following steps:
Placing (700) the sample holder in a receiving area of the loading station such that a clamping arrangement of the sample holder is positioned at a loading position;
Loading (702) a sample carrier into a loading slider of the loading station (570);
Actuating (704) an actuation mechanism (582) of the loading station (570) in order to separate respective first ends of an upper leg and a lower leg of the clamping arrangement from each other;
Sliding (706) the loading slider towards the sample holder, such that a part of the sample carrier is positioned between the respective first ends of the upper leg and the lower leg; and
Releasing (708) the actuation mechanism such that the sample carrier is clamped between the upper leg and the lower leg.

22. The method of claim 21, for loading multiple sample carriers into the sample holder, further comprising the following steps, for each of the further ones of the multiple sample carriers:
Loading (712) the sample carrier into the loading slider;
Actuating (714) the sample holder in order to position a next clamping arrangement of multiple ones of clamping arrangements of the sample holder at the loading position;
Actuating (716) the actuation mechanism of the loading station in order to separate the respective first ends of the upper leg and a lower leg of the respective clamping arrangement from each other;
Sliding (718) the loading slider towards the sample holder, such that a part of the sample carrier is positioned between the respective first ends of the upper leg and the lower leg; and
Releasing (720) the actuation mechanism such that the sample carrier is clamped between the upper leg and the lower leg.

23. A method of placing a sample cut from a specimen (268) by means of a microtome, on a sample carrier (150) loaded into a sample holder (100, 300), comprising the following steps:
Providing (800) the sample holder in a reception box of the microtome;
Fixing (802) the sample holder at a desired position relative to a knife of the microtome, such that the sample carrier has a desired position relative to the knife;
Providing (804) a fluid in the reception box such that the fluid covers the sample carrier;
Cutting (806) the sample from the specimen by means of the microtome, such that the specimen is located on a surface of the fluid and above the sample carrier;
Removing (808) at least part of the fluid from the reception box such that the sample is lowered and placed on the sample carrier.

24. The method of claim 23, for placing multiple samples cut from the specimen by means of the microtome, on respective ones of multiple sample carriers loaded into the sample holder, further comprising the following steps, for each of the further ones of the multiple sample carriers:
Actuating (810) the sample holder such that a next sample carrier has a desired position relative to the knife;
Providing (812) a fluid in the reception box such that the fluid covers the sample carrier;
Cutting (814) the sample from the specimen by means of the microtome, such that the sample is located on a surface of the fluid and above the respective sample carrier;
Removing (816) at least part of the fluid from the reception box such that the respective sample is lowered and placed on the respective sample carrier.
